(19) Europäisches Patentamt
European Patent Office
Office européen des brevets

(11) **EP 2 764 243 B1**

(12) **FASCICULE DE BREVET EUROPEEN**

(45) Date de publication et mention
de la délivrance du brevet:
**04.07.2018 Bulletin 2018/27**

(21) Numéro de dépôt: **12769452.9**

(22) Date de dépôt: **11.09.2012**

(51) Int Cl.:
**F03G 7/05** $^{(2006.01)}$

(86) Numéro de dépôt international:
**PCT/FR2012/000359**

(87) Numéro de publication internationale:
**WO 2013/050666 (11.04.2013 Gazette 2013/15)**

(54) **PROCÉDÉ ET SYSTÈME PERFECTIONNÉ DE CONVERSION DE L'ÉNERGIE THERMIQUE MARINE**

VERFAHREN UND SYSTEM ZUR UMWANDLUNG VON MEERESWÄRMEENERGIE

METHOD AND IMPROVED SYSTEM FOR CONVERTING MARINE HEAT ENERGY

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **07.10.2011 FR 1103076**

(43) Date de publication de la demande:
**13.08.2014 Bulletin 2014/33**

(73) Titulaire: **IFP Energies nouvelles
92500 Rueil-Malmaison (FR)**

(72) Inventeurs:
• TEIXEIRA, David
F-92500 Rueil-Malmaison (FR)
• MABILE, Claude
F-92140 Clamart (FR)

(56) Documents cités:
WO-A2-2008/042893    US-A1- 2009 294 110
US-A1- 2010 139 271    US-A1- 2010 205 961

**Description**

La présente invention se situe dans le domaine de l'Énergie Thermique des Mers ETM (OTEC pour Ocean Thermal Energy Conversion) qui concerne l'énergie utilisable obtenue en mettant à profit la différence de température existant dans les régions tropicales et subtropicales entre les eaux de mer de surface et les eaux situées en profondeurs, en particulier de l'ordre de 1000 m. Les eaux de surface sont utilisées pour la source chaude et les eaux profondes pour la source froide d'un cycle thermodynamique moteur. La différence de température entre la source chaude et la source froide étant relativement faible, les rendements énergétiques attendus sont eux aussi faibles.

L'objet de l'invention est d'augmenter la température de la source chaude à moindre coût, afin d'améliorer fortement l'efficacité (jusqu'à doubler) d'une centrale ETM classique et donc sa rentabilité. D'autre part, cela permet d'élargir la zone d'implémentation de ce type de centrale, augmentant de ce fait le marché potentiel.

Les centrales ETM conventionnelles fonctionnent généralement selon un cycle de (cf WO 2008/042893 A2). Il est connu une variante de ce cycle avec surchauffe (cycle de Hirn). Le cycle de Hirn consiste à chauffer suffisamment le fluide moteur pour que, après la détente, il soit toujours gazeux. Mais ces centrales ne présentent pas une optimisation maximale dans toutes les localisations imposées.

L'objet de l'invention est d'optimiser un système de récupération de l'énergie marine en basant la conception de la centrale, compte tenu des températures imposées des sources froides et chaudes, sur les règles suivantes : le chauffage par la source chaude (eau de mer de surface) provoque la vaporisation quasi-totale du fluide moteur, et une source secondaire assure une chauffe complémentaire au fluide moteur vaporisé.

Ainsi, la présente invention concerne un procédé de conversion de l'énergie thermique marine - selon la revendication 1. On peut récupérer par deux étages de turbines l'énergie thermique du fluide moteur vaporisé et chauffé, et on peut chauffer le fluide moteur entre les deux étages de turbines par un échange thermique entre le fluide moteur et l'eau de mer chaude de surface. On peut chauffer le fluide moteur entre les deux étages de turbines par un échange thermique entre le fluide moteur et une portion du fluide moteur prélevée en aval de la seconde turbine, ladite portion étant recombinée, après détente, dans le circuit principal du fluide moteur.

On peut constituer la source froide avec un circuit fermé d'un fluide frigoporteur qui échange thermiquement avec l'eau de mer froide de profondeur.

L'invention concerne également un système de conversion de l'énergie thermique marine comportant :

- des moyens de circulation en circuit fermé d'un fluide moteur de caractéristique déterminé entre une source froide et une source chaude, lesdites sources étant respectivement constituées par un échangeur thermique entre le fluide moteur et un fluide à la température de l'eau de mer froide de profondeur et un échangeur thermique entre le fluide moteur et un fluide à la température de l'eau de mer chaude de surface,
- des moyens de compression du fluide moteur entre la source froide et la source chaude pour que, compte tenu des conditions thermodynamiques des sources et de la nature du fluide moteur, ledit fluide moteur soit sensiblement totalement vaporisé en sortie de la source chaude,
- des moyens de chauffe secondaire, en aval de la source chaude, dudit fluide moteur vaporisé,
- des moyens de récupération de l'énergie thermique du fluide moteur vaporisé et chauffé,
- des moyens de condensation du fluide moteur dans la source froide.

Les moyens de récupération de l'énergie thermique du fluide moteur vaporisé et chauffé peuvent comporter deux étages de turbines, et un échangeur thermique entre le fluide moteur et un fluide à la température de l'eau de mer chaude de surface, l'échangeur étant disposé entre les deux étages de turbines. L'échangeur thermique disposé entre les deux étages de turbines peut constituer un échange thermique entre le fluide moteur et une portion du fluide moteur prélevée en aval de la seconde turbine par un diviseur de flux, comprimée dans un compresseur, puis après détente dans une vanne, recombinée dans le circuit principal du fluide moteur par un mélangeur.

Les moyens de chauffe secondaire peuvent comporter une pompe à chaleur dont la source chaude est constituée par un échangeur thermique avec l'eau de mer chaude de surface.

La source froide peut comporter un circuit fermé d'un fluide frigoporteur qui échange thermiquement avec l'eau de mer froide de profondeur.

La conception de la centrale repose sur les moyens mis en oeuvre pour obtenir une méthode de chauffage spécifique au cours du cycle moteur, en particulier de façon à ce que l'énergie de chauffage par l'eau de surface vaporise le fluide moteur, et que la source secondaire de chaleur spécifique au fluide moteur vaporisé, apporte un niveau d'énergie supplémentaire qui permet d'augmenter la rentabilité du cycle.

La présente invention ne se limite pas aux cycles de Rankine, tous les cycles thermodynamiques utilisés par des centrales ETM peuvent être avantageusement perfectionnés par l'invention.

Ce principe de "diviser le travail" de chauffage du fluide moteur entre l'eau de mer chaude (peu coûteuse) et une source additionnelle de chaleur permet une bonne adaptabilité du système selon l'invention aux situations locales, avec une meilleure rentabilité.

La présente invention sera mieux comprise et ses avantages apparaîtront plus clairement à la lecture de la description qui suit, exemples de mise en oeuvre, nullement limitatifs, illustrés par les figures ci-après annexées, parmi lesquelles :

- la figure 1 donne une représentation du cycle thermodynamique d'une centrale ETM dont la source chaude est améliorée sur un diagramme enthalpique,
- la figure 2 montre schématiquement un système de mise en oeuvre de l'invention,
- la figure 3 donne, en variante, une représentation du cycle thermodynamique d'une centrale ETM dont la source chaude est améliorée sur un diagramme enthalpique,
- la figure 4 montre schématiquement une variante du système selon l'invention,
- la figure 5 illustre une pompe à chaleur,
- la figure 6 illustre une variante pour un échange thermique entre deux étages de turbines.

L'invention repose donc sur la division du travail entre l'eau chaude et une source additionnelle de chaleur. Le principe est le suivant : l'eau de mer chaude, peu coûteuse, assure la vaporisation du fluide de travail, puis une autre source de chaleur augmente la température de ce dernier.

On obtient le cycle thermodynamique par le raisonnement ci-après. La pression de la source froide est imposée par la température de cette dernière. En effet, la pression doit être suffisante pour que la source froide puisse condenser le fluide de travail en abaissant simplement sa température.

Une fois la pression de la source froide $P_{froid}$ déterminée, on cherche le point d'intersection entre l'isentropique passant par $T_{froid}$ et $P_{froid}$ (gazeux) et la droite horizontale dont la température est $T_{EauChaude}$ dans la cloche du diagramme enthalpique. On obtient ainsi la pression de la source chaude et le point d'intersection nous donne la température $T_{Chaud}$ qui optimise le système.

Selon ce raisonnement et en prenant les températures d'eau chaude et froide respectivement de 303 K et 278 K, on trace sur la figure 11e cycle thermodynamique ainsi obtenu avec l'ammoniac comme fluide de travail.

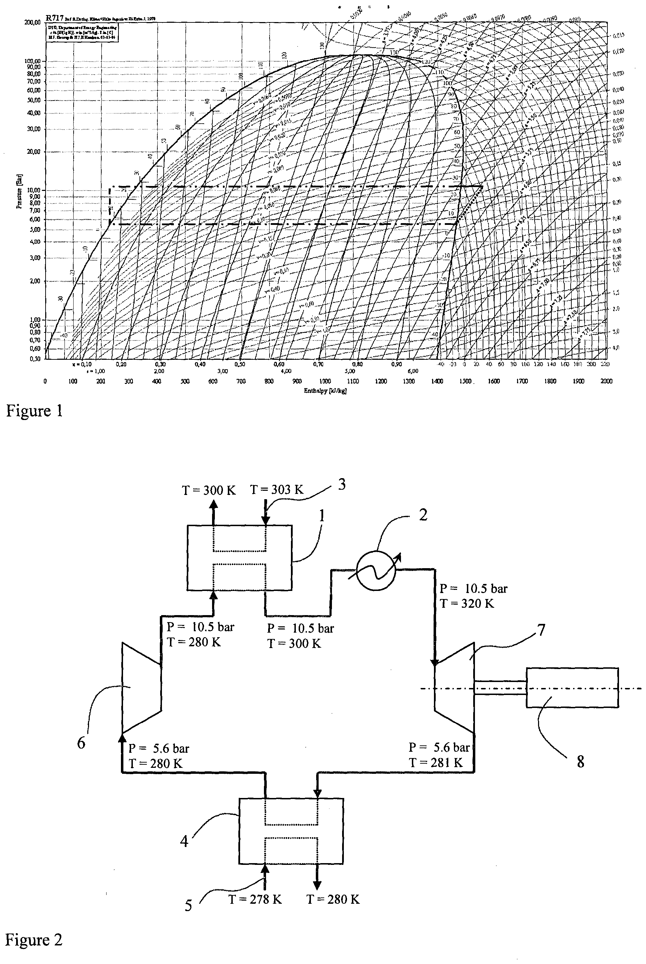

La figure 2 présente le schéma de base d'une centrale ETM fonctionnant avec un cycle de Rankine et comprenant un échangeur 1 de source chaude et une source de chaleur secondaire 2. La source de chaleur secondaire peut être réalisée avec toutes sources permettant d'atteindre une température supérieure à la température de l'eau de mer de surface (référence 3) et suffisante pour améliorer le cycle thermodynamique.

Le système comprend un échangeur de source froide 4 à partir de l'eau de mer froide (référence 5) prélevée en profondeur. D'une manière équivalente, et sans sortir de la présente invention, on peut utiliser un fluide frigoporteur qui transporte l'énergie de l'eau de mer des profondeurs vers l'échangeur de source froide. Le circuit du fluide moteur, dans le présent exemple de l'ammoniac, comporte un compresseur 6 et une turbine 7 entrainant un générateur 8.

Les valeurs de pression (P en bar) et température (T en kelvin) dépendent des températures d'eau froide et d'eau chaude, et de la nature du fluide moteur qui est pratiquement totalement vaporisé en sortie de l'échangeur de source chaude.

Une variante du procédé consiste de la même façon à "diviser le travail" entre l'eau chaude et une source additionnelle de chaleur, mais avec une solution qui permet de diminuer l'énergie fournie par la source secondaire de chaleur.

On obtient le cycle thermodynamique, pour de l'ammoniac, par le raisonnement ci-après :
Comme précédemment, la pression de la source froide est imposée par la température de cette dernière. En effet, la pression doit être suffisante pour que la source froide puisse condenser le fluide de travail en abaissant simplement sa température.

Une fois la pression de la source froide $P_{froid}$ déterminée, on cherche le point d'intersection entre l'isentropique passant par $T_{froid}$ et $P_{froid}$ (gazeux) et l'isotherme à la température de l'eau chaude, pour obtenir ainsi le second étage du cycle. Cette intersection permet de déterminer la pression intermédiaire. A partir de ce dernier point, on suit l'isobare jusqu'à la courbe de début de changement de phase. On obtient ainsi la pression et la température de sortie du premier étage.

Ensuite, on cherche l'intersection entre l'isentropique passant par le dernier point et la droite horizontale dont la température est $T_{EauChaude}$ dans la cloche du diagramme enthalpique. On obtient ainsi le premier étage du cycle. Cette intersection permet de déterminer la haute pression.

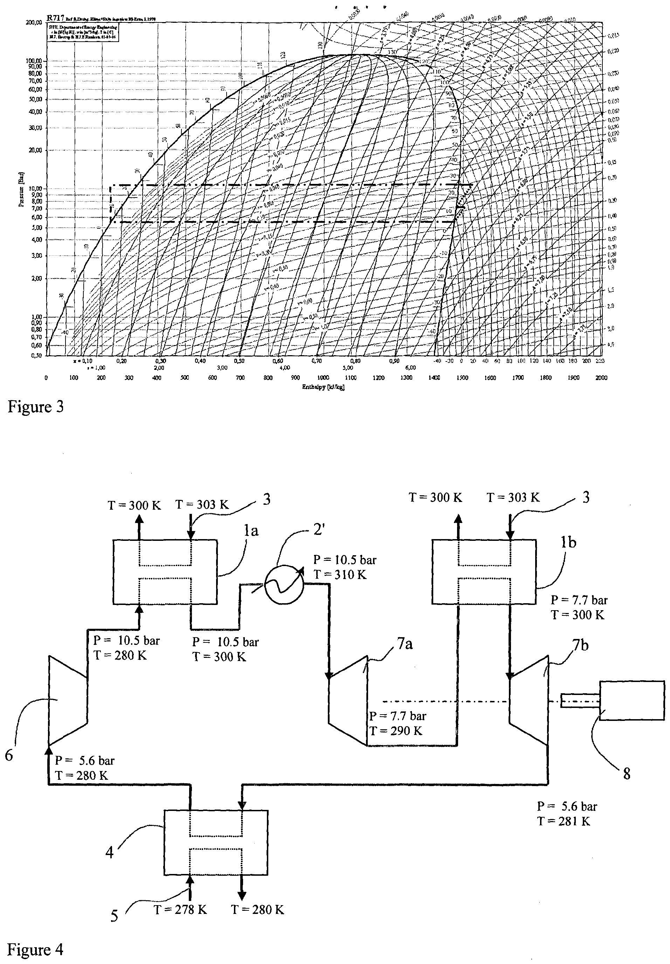

En considérant les températures d'eau chaude et froide respectivement de 303 K et 278 K, on a tracé sur la figure 3 le nouveau cycle thermodynamique ainsi obtenu avec l'ammoniac comme fluide de travail.

Cette variante peut être envisagée pour récupérer de la puissance sur plusieurs étages de détentes. Le but est de diminuer l'énergie apportée par la source de chaleur secondaire 2'. La figure 4 représente un système à deux étages de récupération d'énergie. Dans le cas d'une telle centrale, le circuit du fluide moteur, ici de l'ammoniac, ne subit aucune différence entre l'entrée de l'échangeur de source froide 4 et la sortie de l'échangeur de source chaude la. En aval de cet échangeur, le circuit comporte une source de chaleur secondaire 2' qui, dans cette variante, fournit moins d'énergie. Dans cet exemple, elle ne fournit que la moitié de l'énergie par rapport au système selon la figure 2. Après cette source de chaleur secondaire 2', le fluide est détendu dans une première turbine 7a. La température du fluide moteur étant moins élevée que dans le cas à un étage, le taux de détente est plus faible. La puissance récupérée est elle aussi plus faible. Dans cet exemple, elle représente la moitié de celle récupérée sur le système de la figure 2. En sortie de cette première turbine 7a (HP), le fluide moteur est réchauffé dans un échangeur de source chaude 1b du 2ème étage. Puis, il est détendu dans une deuxième turbine 7b (BP). Dans l'exemple, la deuxième turbine permet de récupérer la même puissance que la première. Chaque turbine peut entraîner un générateur électrique, ou les deux turbines peuvent être sur un mono arbre d'un même générateur. Ainsi, cette variante illustre un procédé qui permet de récupérer en final la même énergie que le système de la figure 2, et avantageusement avec une diminution de la puissance demandée à la source de chaleur secondaire.

Exemples :

Le Tableau 1 donne les débits d'ammoniac, d'eau de mer de surface chaude et d'eau de mer profonde, froide pour une centrale ETM sans source de chaleur secondaire, de 10 MW sur la turbine.

Tableau 1

| Débit d'ammoniac | Débit d'eau chaude | Débit d'eau froide |
|---|---|---|
| 0,25 t/s | 27 t/s | 38 t/s |

Le Tableau 2 donne les puissances mises en jeux dans les différents éléments du circuit du système d'une centrale conventionnelle. Les rendements du compresseur et de la turbine ont été fixés à 0,9.

Tableau 2

| Compresseur | Turbine | Source froide | Source chaude | Rendement global |
|---|---|---|---|---|
| 0,093 MW | 10,045 MW | 312 MW | 322 MW | 3,1 % |

Le Tableau 3 présente, les puissances mis en jeux et le rendement global du cycle d'une centrale avec source de chaleur secondaire permettant de vérifier les conditions de température et pression inscrites sur la Figure 2. Les débits d'eau et d'ammoniac sont les mêmes que pour la centrale conventionnelle selon le Tableau 1.

Tableau 3

| Compresseur | Turbine | Source froide | Source chaude | Source chaude 2 | Rendement |
|---|---|---|---|---|---|
| 0,22 MW | 20,4 MW | 312 MW | 322 MW | 10,6 MW | 6,1 % |

On constate qu'un apport d'environ 10 MW de chaleur (correspondant à 3 % de la source chaude) permet de doubler le rendement, mais surtout permet de doubler la puissance récupérée par la turbine. La quasi totalité de la puissance introduite par la seconde source chaude est transformée en travail dans la turbine.

$$\eta = \frac{W_{Turbine}}{Q_{Chaud}} \simeq \frac{W_{Turbine}}{Q_{Chaud\_1} + Q_{Chaud\_2}}$$

Nota : le rendement $\eta$ est défini comme

Variante à deux étages :

Le Tableau 4 donne les puissances mises en jeux et le rendement global du cycle d'une centrale avec source de chaleur secondaire et à deux étages, permettant de vérifier les conditions de température et pression de la figure 4. Les débits d'eau et d'ammoniac sont les mêmes que pour la centrale classique. Les références correspondent aux références de la figure 4.

Tableau 4

| Compresseur (6) | Turbine HP (7a) | Turbine BP (7b) | Source froide (4) | Source chaude (1a) | Source chaude (2') | Source chaude (1b) | Rdt η |
|---|---|---|---|---|---|---|---|
| 0,22 MW | 10,1 MW | 10,0 MW | 312 MW | 322 MW | 4,8 MW | 5,4 MW | 6,1% |

On constate que l'énergie fournie par la source chaude secondaire est divisée par deux, alors que le rendement global est le même.

$$\eta = \frac{W_{Turbine}}{Q_{Chaud}} = \frac{W_{Turbine\_1} + W_{Turbine\_2}}{Q_{Chaud\_1} + Q_{Chaud\_2} + Q_{Chaud\_3}}$$

Le rendement η est défini comme

Sources de chaleur secondaire :

Bien que la source secondaire de chaleur puisse être assurée par de nombreux moyens connus (à partir de carburants fossiles ou d'énergies renouvelables), l'utilisation de pompe à chaleur est particulièrement avantageuse dans le domaine des ETM où sources froide et chaude sont à disposition.

Une pompe à chaleur (PAC) est un dispositif thermodynamique permettant de transférer la chaleur du milieu le plus froid (et donc de le refroidir encore) vers le milieu le plus chaud (et donc de le chauffer), alors que, naturellement, la chaleur se diffuse du plus chaud vers le plus froid jusqu'à l'égalité des températures. L'efficacité des pompes à chaleurs $\eta_{pac}$ est définie telle que :

**Erreur ! Des objets ne peuvent pas être créés à partir des codes de champs de mise en forme.**
où $W_{pac}$ est la puissance fournie à la pompe à chaleur. L'efficacité peut atteindre des valeurs de 7 dans les meilleurs cas.

Dans le cas présent, la PAC peut avoir comme source froide, l'eau chaude de l'océan, ainsi la PAC peut fournir de la chaleur 24h/24h. Cependant, la pompe à chaleur a une consommation d'énergie propre pour activer son compresseur. Ceci va donc inévitablement diminuer le rendement du dispositif.

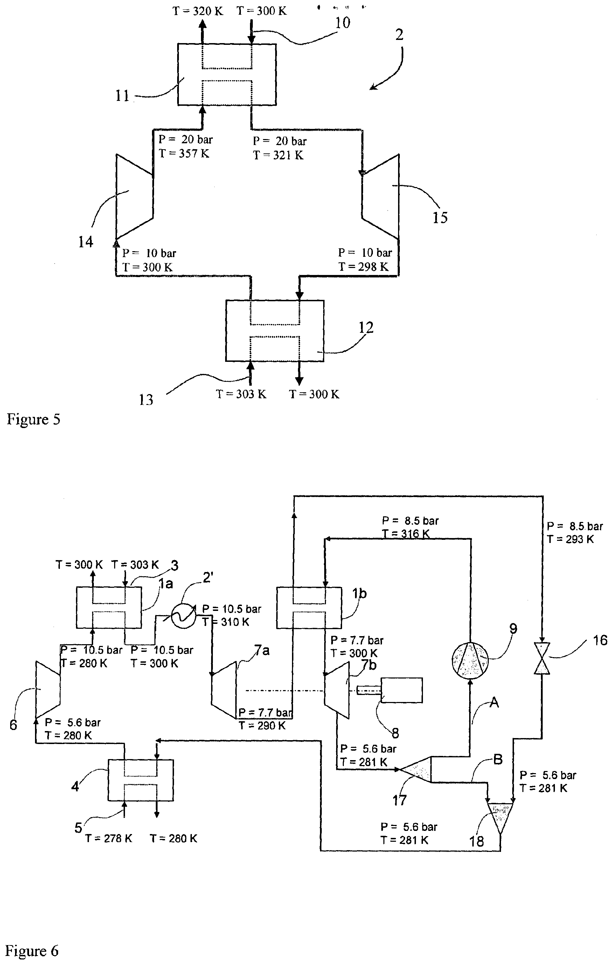

La Figure 5 montre le schéma d'une PAC, dont le fluide de travail est de l'ammoniac, permettant de fournir 10 MW thermique à 320 K, selon l'élément de chauffe secondaire 2 intégré au circuit de la figure 2. La référence 10 correspond au circuit du fluide moteur du circuit principal qui est chauffé par cette source de chaleur 2 (PAC) dans un échangeur "source froide" 11. L'échangeur "source chaude" 12 capte l'énergie thermique de l'eau chaude de mer de surface 13. La PAC comporte un compresseur 14 et un détendeur 15.

Le Tableau 5 donne les résultats de calcul des puissances des éléments, des débits et efficacité de la PAC, selon les conditions inscrites sur le schéma du circuit de la PAC de la figure 5.

Tableau 5

| Compresseur | Source froide | Source chaude | Débit | Efficacité |
|---|---|---|---|---|
| 1,1 MW | 10,4 MW | 9,33 MW | 9 kg/s | 8,5 |

Pour une réalisation d'une source de chaleur secondaire selon le circuit de la figure 4, une PAC identique fonctionnant à un débit de moitié suffit.

La figure 6 illustre une autre variante dans laquelle la source de chaleur secondaire est constituée à partir d'une portion du fluide moteur. Le fluide moteur de NH3 gazeux en sortie de la deuxième turbine 7b (BP) est séparé en deux portions dans un diviseur de flux (Splitter) 17, avec environ 4 % de flux secondaire circulant dans le conduit A et 96 % dans le conduit B.

Le conduit A mène à un compresseur 9 et le flux secondaire échange de la chaleur dans l'échangeur 1b en amont de la seconde turbine 7b et en aval de la première turbine 7a. Le flux secondaire est ensuite détendu dans une vanne 16 avant d'être recombiné au flux principal dans un mélangeur 18.

La figure 6 donne en exemple les valeurs de pressions et températures en divers points du circuit de la source chaude secondaire, selon cette variante.

**Revendications**

1.  Procédé de conversion de l'énergie thermique marine dans lequel :

    - on fait circuler en circuit fermé un fluide moteur de caractéristique déterminé entre une source froide (4) et une source chaude (1), lesdites sources étant respectivement constituées par un échange thermique entre le fluide moteur et l'eau de mer froide de profondeur et un échange thermique entre le fluide moteur et l'eau de mer chaude de surface,
    - on comprime le fluide moteur entre la source froide et la source chaude pour que, compte tenu des conditions thermodynamique des sources et de la nature du fluide moteur, celui-ci soit sensiblement totalement vaporisé en sortie de la source chaude,
    - on récupère sur une turbine (7) l'énergie thermique du fluide moteur vaporisé et chauffé,
    - on condense le fluide moteur dans la source froide, le procédé étant **caractérisé en ce que** on chauffe, en aval de la source chaude, ledit fluide moteur vaporisé, à l'aide d'une pompe à chaleur dont la source chaude est constituée par échange thermique avec l'eau de mer chaude de surface.

2.  Procédé de conversion selon la revendication 1, dans lequel on récupère par deux étages de turbines l'énergie thermique du fluide moteur vaporisé et chauffé, et en ce l'on chauffe le fluide moteur entre les deux étages de turbines par un échange thermique entre le fluide moteur et l'eau de mer chaude de surface.

3.  Procédé de conversion selon la revendication 2, dans lequel on chauffe ledit fluide moteur entre les deux étages de turbines par un échange thermique entre le fluide moteur et une portion du fluide moteur prélevée en aval de la seconde turbine, ladite portion étant recombinée, après détente dans le circuit principal du fluide moteur.

4.  Procédé de conversion selon l'une des revendications précédentes, dans lequel on constitue la source froide avec un circuit fermé d'un fluide frigoporteur qui échange thermiquement avec l'eau de mer froide de profondeur.

5.  Système de conversion de l'énergie thermique marine comportant :

    - des moyens de circulation en circuit fermé d'un fluide moteur de caractéristique déterminé entre une source froide (4) et une source chaude (1), lesdites sources étant respectivement constituées par un échangeur thermique entre le fluide moteur et un fluide à la température de l'eau de mer froide de profondeur et un échangeur thermique entre le fluide moteur et un fluide à la température de l'eau de mer chaude de surface,
    - des moyens de compression (6) du fluide moteur entre la source froide et la source chaude pour que, compte tenu des conditions thermodynamiques des sources et de la nature du fluide moteur, ledit fluide moteur soit sensiblement totalement vaporisé en sortie de la source chaude,
    - des moyens de chauffe secondaire (2), en aval de la source chaude, dudit fluide moteur vaporisé,
    - des moyens de récupération de l'énergie thermique (7) du fluide moteur vaporisé et chauffé,
    - des moyens de condensation du fluide moteur dans la source froide, le système étant **caractérisé en ce que** les moyens de chauffe secondaire (2, 2') comporte une pompe à chaleur dont la source chaude est constituée par une échangeur thermique (12) avec l'eau de mer chaude de surface.

6.  Système de conversion selon la revendication 5, dans lequel les moyens de récupération de l'énergie thermique du fluide moteur vaporisé et chauffé comportent deux étages de turbines (7a, 7b), et un échangeur thermique (1b) entre le fluide moteur et un fluide à la température de l'eau de mer chaude de surface, ledit échangeur étant disposé entre les deux étages de turbines.

7.  Système de conversion selon l'une des revendications 5 et 6 dans lequel la source froide comporte un circuit fermé d'un fluide frigoporteur qui échange thermiquement avec l'eau de mer froide de profondeur.

8.  Système de conversion selon la revendication 6, dans lequel ledit échangeur thermique disposé entre les deux étages de turbines constitue un échange thermique entre le fluide moteur et une portion du fluide moteur (A) prélevée en aval de la seconde turbine par un diviseur de flux (17), comprimée dans un compresseur (9), puis après détente dans une vanne (16), recombinée dans le circuit principal du fluide moteur par un mélangeur (18).

**Patentansprüche**

1. Verfahren zur Umwandlung von Meereswärmeenergie, wobei:

   - Zirkulierenlassen eines Arbeitsfluids mit einer gegebenen Eigenschaft in einem geschlossenen Kreislauf zwischen einer kalten Quelle (4) und einer warmen Quelle (1), wobei die Quellen jeweils durch einen Wärmeaustausch zwischen dem Arbeitsfluid und dem kalten Meerwasser aus der Tiefe bzw. einem Wärmeaustausch zwischen dem Arbeitsfluid und dem warmen Oberflächenmeerwasser gebildet werden,
   - Komprimieren des Arbeitsfluids zwischen der kalten Quelle und der warmen Quelle, unter Berücksichtigung der thermodynamischen Bedingungen der Quellen und der Beschaffenheit des Arbeitsfluids, damit dieses am Ausgang der warmen Quelle im Wesentlichen vollständig verdampft ist,
   - Gewinnen der Wärmeenergie aus dem verdampften und erwärmten Arbeitsfluid an einer Turbine (7),
   - Kondensieren des Arbeitsfluids in der kalten Quelle,

   wobei das Verfahren **dadurch gekennzeichnet ist, dass** das verdampfte Arbeitsfluid stromabwärts der warmen Quelle mithilfe einer Wärmepumpe, deren Wärmequelle durch Wärmeaustausch mit dem warmen Oberflächenmeerwasser gebildet wird, erwärmt wird.

2. Umwandlungsverfahren nach Anspruch 1, wobei die Wärmeenergie des verdampften und erwärmten Arbeitsfluids in zwei Turbinenstufen gewonnen wird, und dadurch dass das Arbeitsfluid zwischen den beiden Turbinenstufen durch Wärmeaustausch zwischen dem Arbeitsfluid und dem warmen Oberflächenmeerwasser erwärmt wird.

3. Umwandlungsverfahren nach Anspruch 2, wobei das Arbeitsfluid zwischen den zwei Turbinenstufen durch einen Wärmeaustausch zwischen dem Arbeitsfluid und einem stromabwärts der zweiten Turbine entnommenem Anteil des Arbeitsfluids erwärmt wird, wobei der Anteil, nach der Expansion, im Hauptkreislauf des Arbeitsfluids, wieder zusammengeführt wird.

4. Umwandlungsverfahren nach einem der vorhergehenden Ansprüche, wobei die kalte Quelle mit einem geschlossenen Kreislauf eines Kühlfluids gebildet wird, das Wärme mit dem kalten Meerwasser aus der Tiefe austauscht.

5. System zur Umwandlung von Meereswärmeenergie, umfassend:

   - Einrichtungen zum Zirkulieren eines Arbeitsfluids mit einer gegebenen Eigenschaft in einem geschlossenen Kreislauf zwischen einer kalten Quelle (4) und einer warmen Quelle (1), wobei die Quellen jeweils durch einen Wärmetauscher zwischen dem Arbeitsfluid und einem Fluid mit der Temperatur des kalten Meerwassers aus der Tiefe bzw. einem Wärmetauscher zwischen dem Arbeitsfluid und einem Fluid mit der Temperatur des warmen Oberflächenmeerwassers gebildet werden,
   - Einrichtungen zum Komprimieren (6) des Arbeitsfluids zwischen der kalten Quelle und der warmen Quelle, unter Berücksichtigung der thermodynamischen Bedingungen der Quellen und der Beschaffenheit des Arbeitsfluids, damit das Arbeitsfluid am Ausgang der warmen Quelle im Wesentlichen vollständig verdampft ist,
   - zusätzliche Erwärmungseinrichtungen (2) stromabwärts der warmen Quelle für das verdampfte Arbeitsfluid,
   - Einrichtungen zum Gewinnen der Wärmeenergie (7) aus dem verdampften und erwärmten Arbeitsfluid,
   - Einrichtungen zum Kondensieren des Arbeitsfluids in der kalten Quelle,

   wobei das System **dadurch gekennzeichnet ist, dass** die zusätzlichen Einrichtungen zum Erwärmen (2, 2') eine Wärmepumpe umfassen, deren warme Quelle durch einen Wärmetauscher (12) mit dem warmen Oberflächenmeerwasser gebildet wird.

6. Umwandlungssystem nach Anspruch 5, wobei die Einrichtungen zum Gewinnen der Wärmeenergie des verdampften und erwärmten Arbeitsfluids zwei Turbinenstufen (7a, 7b) und einen Wärmetauscher (1b) zwischen dem Arbeitsfluid und einem Fluid mit der Temperatur des warmen Oberflächenmeerwassers umfassen, wobei der Tauscher zwischen den beiden Turbinenstufen angeordnet ist.

7. Umwandlungssystem nach einem der Ansprüche 5 und 6, wobei die kalte Quelle einen geschlossenen Kreislauf eines Kühlfluids umfasst, der Wärme mit dem kalten Meerwasser aus der Tiefe austauscht.

8. Umwandlungssystem nach Anspruch 6, wobei der Wärmetauscher, der zwischen den beiden Turbinenstufen angeordnet ist, einen Wärmeaustausch zwischen dem Arbeitsfluid und einem Anteil des Arbeitsfluids (A) bildet, der stromabwärts der zweiten Turbine durch einen Strömungsteiler (17) entnommenen wird, in einem Verdichter (9) verdichtet wird, dann nach der Expansion in einem Ventil (16) in dem Hauptkreislauf des Arbeitsfluids durch einen Mischer (18) zusammengeführt wird.

**Claims**

1. An ocean thermal energy conversion method wherein:

   - a motive fluid having predetermined characteristics is circulated in a closed loop between a cold source (4) and a heat source (1), said sources being respectively generated by heat exchange between the motive fluid and cold deep ocean water, and heat exchange between the motive fluid and warm surface ocean water,
   - the motive fluid is compressed between the cold source and the heat source so that, considering the thermodynamic conditions of the sources and the nature of the motive fluid, the motive fluid is substantially totally vaporized at the heat source outlet,
   - the thermal energy of the vaporized heated motive fluid is recovered from a turbine (7),
   - the motive fluid is condensed in the cold source,

   the method being **characterized in that** said vaporized motive fluid is heated downstream from the heat source by means of a heat pump whose heat source is generated by heat exchange with warm surface ocean water.

2. A conversion method as claimed in claim 1, wherein the thermal energy of the vaporized heated motive fluid is recovered through two turbine stages, and the motive fluid is heated between the two turbine stages by heat exchange between the motive fluid and the warm surface ocean water.

3. A conversion method as claimed in claim 2, wherein said motive fluid is heated between the two turbine stages by heat exchange between the motive fluid and a motive fluid portion withdrawn downstream from the second turbine, said portion being recombined, after expansion, in the main motive fluid circuit.

4. A conversion method as claimed in any one of the previous claims, wherein the cold source is generated with a closed loop of a refrigerant fluid that exchanges thermally with the cold deep ocean water.

5. An ocean thermal energy conversion system comprising:

   - means for closed-loop circulation of a motive fluid having predetermined characteristics between a cold source (4) and a heat source (1), said sources respectively consisting of a heat exchanger between the motive fluid and a fluid at the temperature of the cold deep ocean water, and a heat exchanger between the motive fluid and a fluid at the temperature of the warm surface ocean water,
   - motive fluid compression means (6) between the cold source and the heat source so that, considering the thermodynamic conditions of the sources and the nature of the motive fluid, said motive fluid is substantially totally vaporized at the heat source outlet,
   - secondary heating means (2) for said vaporized motive fluid, downstream from the heat source,
   - means (7) for recovering the thermal energy of the vaporized heated motive fluid,
   - means for condensation of the motive fluid in the cold source,

   the system being **characterized in that** secondary heating means (2, 2') comprise a heat pump whose heat source consists of a heat exchanger (12) with warm surface ocean water.

6. A conversion system as claimed in claim 5, wherein the means for recovering the thermal energy of the vaporized heated motive fluid comprise two turbine stages (7a, 7b) and a heat exchanger (1b) between the motive fluid and a fluid at the temperature of the warm surface ocean water, said exchanger being arranged between the two turbine stages.

7. A conversion system as claimed in any one of claims 5 and 6, wherein the cold source comprises a closed loop of a refrigerant fluid that exchanges thermally with the cold deep ocean water.

8. A conversion system as claimed in claim 6, wherein said heat exchanger arranged between the two turbine stages performs a heat exchange between the motive fluid and a motive fluid portion (A) withdrawn downstream from the second turbine by a flow splitter (17), compressed in a compressor (9), then, after expansion in a valve (16), recombined in the main motive fluid circuit by a mixer (18).

Figure 1

Figure 2

Figure 3

Figure 4

Figure 5

Figure 6

**EP 2 764 243 B1**

**RÉFÉRENCES CITÉES DANS LA DESCRIPTION**

**Documents brevets cités dans la description**

- WO 2008042893 A2